(19) Europäisches Patentamt / European Patent Office / Office européen des brevets

(11) **EP 3 579 038 A1**

(12) **EUROPEAN PATENT APPLICATION**
published in accordance with Art. 153(4) EPC

(43) Date of publication:
**11.12.2019 Bulletin 2019/50**

(51) Int Cl.:
**G02B 7/02** *(2006.01)*    **F02P 23/04** *(2006.01)*

(21) Application number: **17895462.4**

(86) International application number:
**PCT/JP2017/042201**

(22) Date of filing: **24.11.2017**

(87) International publication number:
**WO 2018/142730 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.02.2017 JP 2017017350**

(71) Applicant: **Nippon Electric Glass Co., Ltd.**
**Otsu-shi, Shiga 520-8639 (JP)**

(72) Inventor: **TOMITA, Mitsuru**
**Otsu-shi**
**Shiga 520-8639 (JP)**

(74) Representative: **Tetzner, Michael et al**
**Tetzner & Partner mbB**
**Patent- und Rechtsanwälte**
**Van-Gogh-Strasse 3**
**81479 München (DE)**

(54) **OUTER CYLINDER LENS AND LASER IGNITION DEVICE**

(57)    Provided is an outer cylinder lens that can ease the force applied to an outer cylinder in association with temperature rise and is thus less likely to be damaged. An outer cylinder lens includes a lens 2 and a holder 3 holding the lens 2 thereinside, wherein the holder 3 has an outer wall surface 3b which is a surface opposite to a surface on the side of the lens 2, the outer wall surface 3b is provided with at least one cutaway 4, and the outer cylinder lens further includes an outer cylinder 5 provided around the outer wall surface 3b.

[FIG. 2]

## Description

[Technical Field]

The present invention relates to outer cylinder lenses with a lens disposed inside an outer cylinder and laser ignition devices including the outer cylinder lenses.

[Background Art]

An outer cylinder lens is used in a laser ignition device for an internal combustion engine of a motor vehicle or the like. Patent Literature 1 below describes an example of such a laser ignition device including an outer cylinder lens. In the outer cylinder lens described in Patent Literature 1, a holder is provided around an outer periphery of a lens and an outer cylinder is provided around an outer periphery of the holder. High-energy density laser light is focused into a mixed gas in an internal combustion engine by the outer cylinder lens, so that a flame kernel can be generated.

[Citation List]

[Patent Literature]

[PTL 1]
JP-A-2013-096392

[Summary of Invention]

[Technical Problem]

The holder of the outer cylinder lens described in Patent Literature 1 is thermally expanded by temperature rise associated with running of the internal combustion engine. In this situation, due to the thermal expansion of the holder, a large force is applied from the holder to the outer cylinder, so that the outer cylinder may crack.
An object of the present invention is to provide an outer cylinder lens that can ease the force applied to an outer cylinder in association with temperature rise and is thus less likely to be damaged.
Another object of the present invention is to provide a laser ignition device that can ease the force applied to an outer cylinder in association with temperature rise and thus makes an outer cylinder lens less likely to be damaged.

[Solution to Problem]

An outer cylinder lens according to the present invention includes a lens and a holder holding the lens thereinside, wherein the holder has an outer wall surface which is a surface opposite to a surface on the side of the lens, the outer wall surface is provided with at least one cutaway, and the outer cylinder lens further includes an outer cylinder provided around the outer wall surface.
In the present invention, preferably, the holder has a first end surface and a second end surface both connected to the outer wall surface and the at least one cutaway reaches the first end surface and the second end surface.
In the present invention, the holder may have a first end surface and a second end surface both connected to the outer wall surface and the holder may be provided with a through hole passing through from the first end surface to the second end surface.
In the present invention, an area of a portion of the outer wall surface of the holder where the cutaway is provided is preferably 1% to 50%, both inclusive, of a whole area of the outer wall surface.
Furthermore, an outer cylinder lens according to the present invention includes: a lens; a holder holding the lens thereinside, the holder having an outer wall surface which is a surface opposite to a surface on the side of the lens; and an outer cylinder provided around the outer wall surface, wherein Sh/S is 0.995 or less where S represents a cross-sectional area between the lens and the outer cylinder and Sh represents a cross-sectional area of the holder.
Moreover, a laser ignition device according to the present invention includes a laser light source and the above-described outer cylinder lens.

[Advantageous Effects of Invention]

The present invention enables provision of an outer cylinder lens that can ease the force applied to an outer cylinder in association with temperature rise and is thus less likely to be damaged.
The present invention also enables provision of a laser ignition device that can ease the force applied to an outer cylinder in association with temperature rise and thus makes an outer cylinder lens less likely to be damaged.

[Brief Description of Drawings]

[Fig. 1]Fig. 1 is a plan view showing an outer cylinder lens according to a first embodiment of the present invention.
[Fig. 2]Fig. 2 is a cross-sectional view taken along the line I-I in Fig. 1.
[Fig. 3]Fig. 3 is a plan view showing an outer cylinder lens according to a second embodiment of the present invention.
[Fig. 4]Fig. 4 is a plan view showing an outer cylinder lens according to a third embodiment of the present invention.
[Fig. 5]Fig. 5 is a schematic cross-sectional view showing a laser ignition device according to a fourth embodiment of the present invention.

[Fig. 6]Fig. 6 is a plan view showing an outer cylinder lens as a comparative example.

[Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

(Outer Cylinder Lens)

(First Embodiment)

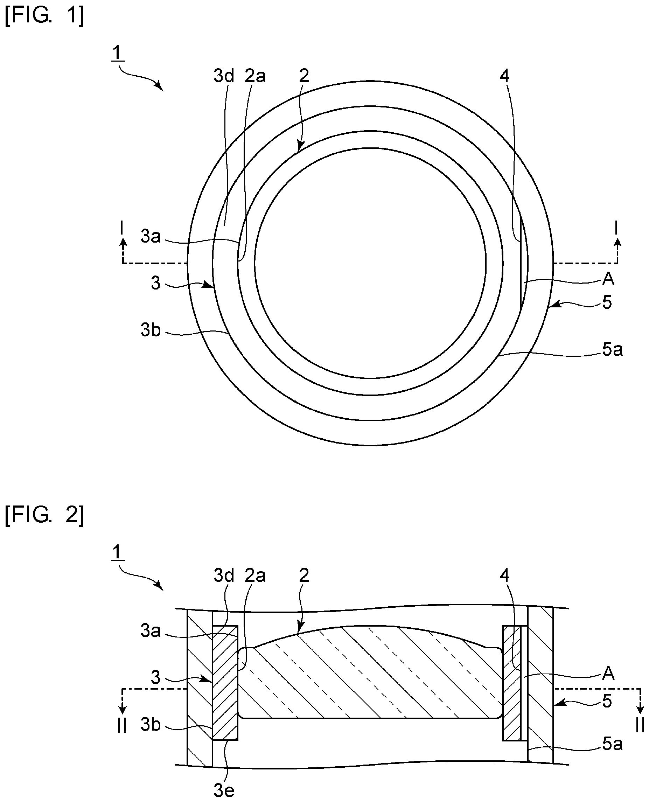

Fig. 1 is a plan view showing an outer cylinder lens according to a first embodiment of the present invention. Fig. 2 is a cross-sectional view taken along the line I-I in Fig. 1. As shown in Figs. 1 and 2, the outer cylinder lens 1 according to this embodiment can be used in a laser ignition device and so on. As shown in Fig. 1, the outer cylinder lens 1 includes a lens 2 and a holder 3 holding the lens 2 thereinside. More specifically, the lens 2 has a lateral surface 2a. The holder 3 has an approximately cylindrical shape and has an inner wall surface 3a. The inner wall surface 3a of the holder 3 engages the lateral surface 2a of the lens 2. Thus, the holder 3 holds the lens 2.

In this embodiment, the lens 2 is a convex lens, but the lens 2 may be a concave lens.

The holder 3 has an outer wall surface 3b which is a surface opposite to a surface on the side of the lens 2. In this embodiment, the outer wall surface 3b is provided with a single cutaway 4. The cutaway 4 may comprise a plurality of cutaways.

As shown in Fig. 2, the holder 3 has a first end surface 3d and a second end surface 3e both connected to the outer wall surface 3b. The cutaway 4 reaches the first end surface 3d and the second end surface 3e. The cutaway 4 may reach one of the first end surface 3d and the second end surface 3e or may reach neither the first end surface 3d nor the second end surface 3e.

The outer cylinder lens 1 includes an outer cylinder 5 provided around the outer wall surface 3b of the holder 3. The outer cylinder 5 has an inner wall surface 5a which is a surface facing the holder 3. In a portion of the holder 3 where the cutaway 4 is provided, an empty space A is formed between the outer wall surface 3b of the holder 3 and the inner wall surface 5a of the outer cylinder 3.

The lens 2 is made of glass. Examples of the composition of the glass for use in the lens 2 include $SiO_2$-$B_2O_3$-RO-based glasses (where R represents Mg, Ca, Sr or Ba), $SiO_2$-$B_2O_r$R'$_2$O-based glasses (where R' represents Li, Na or K), $SiO_2$-$B_2O_3$RO-R'$_2$O-based glasses (where R' represents Li, Na or K), SnO-

$P_2O_5$-based glasses, $TeO_2$-based glasses, and $Bi_2O_3$-based glasses. However, the composition of the glass for use in the lens 2 is not limited to the above compositions.

The holder 3 is made of, for example, a SUS material. Examples of the SUS material for use in the holder 3 include SUS430, SUS430F, SF-20F, and SF-20T. However, the holder 3 may be made of a metallic material other than the SUS material. The outer cylinder 5 is made of, for example, an appropriate metallic material. In this embodiment, the coefficient of thermal expansion of the outer cylinder 5 is smaller than the coefficient of thermal expansion of the holder 3.

A feature of this embodiment is that the cutaway 4 is provided in the outer wall surface 3b which is a surface of the holder 3 facing the outer cylinder 5. Thus, the force applied to the outer cylinder 5 in association with temperature rise can be eased, so that the outer cylinder lens 1 is less likely to be damaged. This will be described below by comparison between this embodiment and a comparative example.

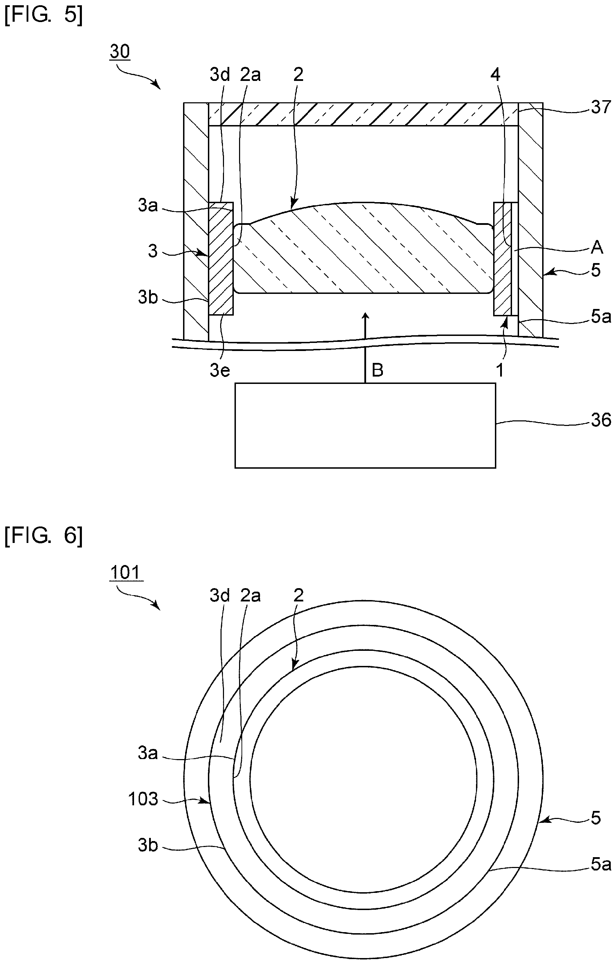

Fig. 6 is a plan view showing an outer cylinder lens as a comparative example. In the outer cylinder lens 101 as a comparative example, an outer wall surface 3b of a holder 103 is provided with no cutaway. For example, if the outer cylinder lens 101 is used in a laser ignition device, the temperature of the outer cylinder lens 101 rises when ignition is effected. Then, each member of the outer cylinder lens 101 thermally expands. The coefficient of thermal expansion of the holder 103 is larger than the coefficient of thermal expansion of the outer cylinder 5. Therefore, the outer wall surface 3b of the holder 103 presses against the inner wall surface 5a of the outer cylinder 5. When a force is applied from the holder 103 to the outer cylinder 5 in association with temperature rise as just described, the outer cylinder 5 may crack.

Unlike the above, in this embodiment shown in Fig. 1, the outer wall surface 3b of the holder 3 is provided with a cutaway 4 and an empty space A is thus formed between the outer wall surface 3b of the holder 3 and the inner wall surface 5a of the outer cylinder 5. Therefore, during temperature rise, the holder 3 not only expands toward the outer cylinder 5, but also expands circumferentially toward the empty space A. Thus, the force applied from the holder 3 to the outer cylinder 5 in association with temperature rise can be eased. Hence, the outer cylinder lens 1 is less likely to be damaged.

As in this embodiment, the cutaway 4 preferably reaches the first end surface 3d and the second end surface 3e. Thus, the cutaway 4 can be located across the holder 3 in a direction connecting between the first end surface 3d and the second end surface 3e. Hence, the force applied to the outer cylinder 5 can be effectively eased.

In this embodiment, the cutaway 4 is provided to cut away the outer wall surface 3b in a direction parallel with a tangent line to the outer wall surface 3b of the holder 3 which would be if the cutaway 4 were not provided. However, the shape of the cutaway 4 is not limited to the above shape. For example, the cutaway 4 may be in a V-shape, a U-shape or other shapes as viewed from the first end surface 3d. Alternatively, the cutaway 4 may be provided helically along the outer wall surface 3b.

The area of a portion of the outer wall surface 3b of the holder 3 where the cutaway 4 is provided is preferably 1% or more of the whole area of the outer wall surface 3b, more preferably 3% or more thereof, still more preferably 5% or more thereof, and most preferably 7% or more thereof. Thus, the force applied to the outer cylinder 5 can be further eased. If the proportion of the area of the portion where the cutaway 4 is provided to the whole area of the outer wall surface 3b is too small, the effect of easing the force applied to the outer cylinder 5 in association with temperature rise may not sufficiently be achieved. Also, the area of the portion where the cutaway 4 is provided is preferably 50% or less of the whole area of the outer wall surface 3b, more preferably 47% or less thereof, still more preferably 44% or less thereof, and yet still more preferably 41% or less thereof. Thus, the holder 3 is less likely to be damaged. If the proportion of the area of the portion where the cutaway 4 is provided to the whole area of the outer wall surface 3b is too large, the holder 3 is likely to be deficient in strength and may be damaged.

Now suppose that the lengths of the parts of the outer cylinder lens 1 along the direction connecting between the first end surface 3d and the second end surface 3e as shown in Fig. 2 are the heights of the parts. Also suppose that the length, along the circumferential direction of the outer wall surface 3b, of the portion of the outer wall surface 3b where the cutaway 4 is provided is the width of the portion. Also suppose that the area of the portion of the outer wall surface 3b where the cutaway 4 is provided is represented by S1, the height of the cutaway 4 is represented by Z1, the width of the cutaway 4 is represented by W, the whole area of the outer wall surface 3b is represented by S2, the height of the holder is represented by Z2, and the outside diameter of the holder 3 is represented by L. In this case, the ratio S1/S2 of the area S1 of the portion of the outer wall surface 3b where the cutaway 4 is provided to the whole area S2 of the outer wall surface 3b can be determined, for example, in the following manner.

$$S1/S2 = (W \times Z1)/(L \times \pi \times Z2)$$

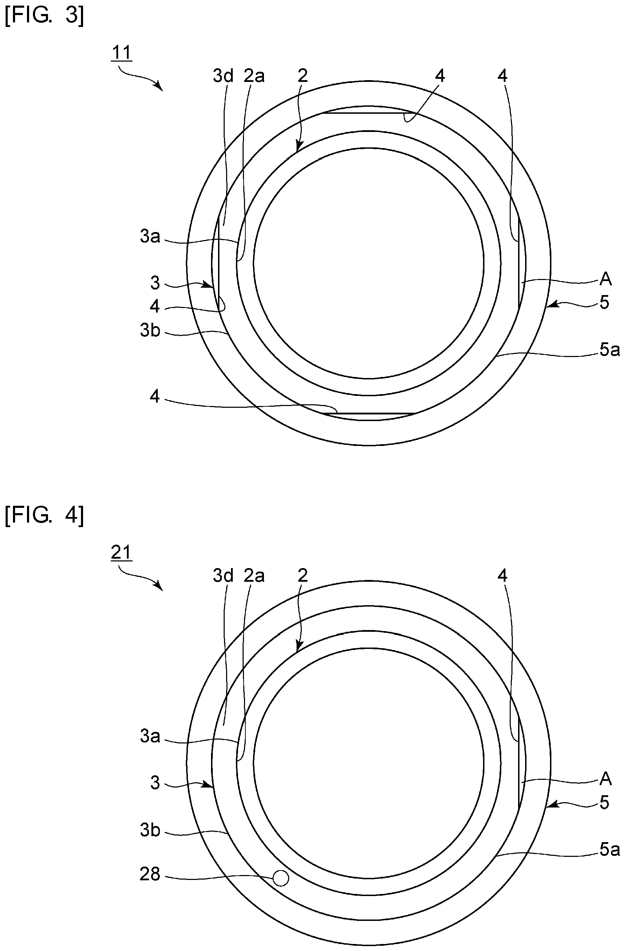

Another feature of this embodiment is that Sh/S is 0.995 or less where S represents the cross-sectional area between the lens 2 and the outer cylinder 5 and Sh represents the cross-sectional area of the holder 3. The cross-sectional area S between the lens 2 and the outer cylinder 5 refers to, for example, a region surrounded by the lateral surface 2a of the lens 2 and the inner wall surface 5a of the outer cylinder 5 in a cross section of the outer cylinder lens 1 as viewed from the direction shown by Fig. 1 (i.e., a cross section as taken along the line II-II in Fig. 2 and further viewed from above). Therefore, the cross-sectional area S is a cross-sectional area including the cutaway 4, a below-described through hole 28 as shown in Fig. 4 or like portion. The cross-sectional area Sh of the holder refers to, for example, an area in which the cutaway 4, the below-described through hole 28 as shown in Fig. 4 or like portion is excluded from the portion surrounded by the lateral surface 2a of the lens 2 and the inner wall surface 5a of the outer cylinder 5 in a cross section of the outer cylinder lens 1 as viewed from the direction shown by Fig. 1 (i.e., a cross section as taken along the line II-II in Fig. 2 and further viewed from above).

When Sh/S is 0.995 or less, like the above-described case, the force applied to the outer cylinder 5 in association with temperature rise can be eased, so that the outer cylinder lens 1 is less likely to be damaged. A preferred range of Sh/S is 0.99 or less and a more preferred range thereof is 0.985 or less. If Sh/S is too large, the effect of easing the force applied to the outer cylinder 5 in association with temperature rise is not sufficiently achieved. Furthermore, Sh/S is preferably 0.8 or more, more preferably 0.85 or more, and still more preferably 0.9 or more. Thus, the holder 3 is less likely to be damaged. If Sh/S is too small, the holder 3 is likely to be deficient in strength and may be damaged.

(Second Embodiment)

Fig. 3 is a plan view showing an outer cylinder lens according to a second embodiment of the present invention. The outer cylinder lens 11 is different from the first embodiment in that the holder 3 includes a plurality of cutaways 4. For the rest, the outer cylinder lens 11 has the same structure as the outer cylinder lens 1 according to the first embodiment.

More specifically, in this embodiment, the outer wall surface 3b of the holder 3 is provided with four cutaways 4. The four cutaways 4 are arranged at equally spaced intervals in the circumferential direction of the holder 3.

The effect of easing the force applied from the holder 3 to the outer cylinder 5 is particularly significant at and near each cutaway 4. In this embodiment, the holder 3 includes the plurality of cutaways 4. In addition, the plurality of cutaways 4 are arranged at equally spaced intervals in the circumferential direction of the holder 3 as described above. Thus, the force applied to the outer cylinder 5 in association with temperature rise can be further eased, so that the outer cylinder lens 1 is even less likely to be damaged.

(Third Embodiment)

Fig. 4 is a plan view showing an outer cylinder lens according to a third embodiment of the present invention. The outer cylinder lens 21 is different from the first embodiment in that the holder 3 is provided with a through hole 28 passing through from the first end surface 3d to the second end surface 3e. For the rest, the outer cylinder lens 21 has the same structure as the outer cylinder lens 1 according to the first embodiment.

Since the outer cylinder lens 21 includes, in addition to the cutaway 4, the through hole 28, the force applied to the outer cylinder 5 in association with temperature rise can be effectively eased. Therefore, the outer cylinder lens 21 is less likely to be damaged.

(Laser Ignition Device)

(Fourth Embodiment)

Fig. 5 is a schematic cross-sectional view showing a laser ignition device according to a fourth embodiment of the present invention. The laser ignition device 30 includes a laser light source 36 and the outer cylinder lens 1.

A window member 37 is disposed in the outer cylinder 5 of the outer cylinder lens 1 to face the lens 2. The window member 37 engages a portion of the inner wall surface 5a located near one end of the outer cylinder 5. However, the location of the window member 37 is not limited to the above location. It is sufficient that the window member 37 be disposed in the side of the outer cylinder lens 1 toward which laser light to be described hereinafter is emitted from the lens 2. The window member 37 is made of a material having high thermal resistance and high transparency, for example, sapphire or quartz glass.

The laser light source 36 is disposed to the side of the lens 2 opposite to the window member 37. Laser light is emitted from the laser light source 36 in the direction shown by the arrow B. The laser light passes through the lens 2, subsequently passes through the window member 37, and then exits from the laser ignition device 30. The laser light is focused by the lens 2, so that ignition is effected.

As in this embodiment, it is preferred that the laser ignition device 30 include a window member 37 having thermal resistance equal to or higher than that of the lens 2. Thus, the outer cylinder lens 1 can be protected from heat when ignition is effected.

The laser ignition device 30 according to this embodiment includes the outer cylinder lens 1 according to the first embodiment. Thus, the force applied to the outer cylinder 5 in association with temperature rise due to ignition made by the laser ignition device 30 can be eased, so that the outer cylinder lens 1 is less likely to be damaged.

[Reference Signs List]

| 1 | outer cylinder lens |
| 2 | lens |
| 2a | lateral surface |
| 3 | holder |
| 3a | inner wall surface |
| 3b | outer wall surface |
| 3d, 3e | first end surface, second end surface |
| 4 | cutaway |
| 5 | outer cylinder |
| 11. 21 | outer cylinder lens |
| 28 | through hole |
| 30 | laser ignition device |
| 36 | laser light source |
| 37 | window member |
| 101 | outer cylinder lens |
| 103 | holder |

**Claims**

1. An outer cylinder lens comprising:

   a lens; and
   a holder holding the lens thereinside,
   wherein the holder has an outer wall surface which is a surface opposite to a surface on the side of the lens,
   the outer wall surface is provided with at least one cutaway, and
   the outer cylinder lens further comprises an outer cylinder provided around the outer wall surface.

2. The outer cylinder lens according to claim 1, wherein the holder has a first end surface and a second end surface both connected to the outer wall surface, and the at least one cutaway reaches the first end surface and the second end surface.

3. The outer cylinder lens according to claim 1 or 2, wherein
   the holder has a first end surface and a second end surface both connected to the outer wall surface, and the holder is provided with a through hole passing through from the first end surface to the second end surface.

4. The outer cylinder lens according to any one of claims 1 to 3, wherein an area of a portion of the outer wall surface of the holder where the cutaway is provided is 1% to 50%, both inclusive, of a whole area of the outer wall surface.

5. An outer cylinder lens comprising:

   a lens;
   a holder holding the lens thereinside, the holder having an outer wall surface which is a surface opposite to a surface on the side of the lens; and an outer cylinder provided around the outer wall surface,

wherein Sh/S is 0.995 or less where S represents a cross-sectional area between the lens and the outer cylinder and Sh represents a cross-sectional area of the holder.

6. A laser ignition device comprising:

a laser light source; and
the outer cylinder lens according to any one of claims 1 to 5.

[FIG. 1]

[FIG. 2]

[FIG. 3]

[FIG. 4]

[FIG. 5]

[FIG. 6]

## INTERNATIONAL SEARCH REPORT

| International application No. |
| --- |
| PCT/JP2017/042201 |

### A. CLASSIFICATION OF SUBJECT MATTER
Int.Cl. G02B7/02(2006.01)i, F02P23/04(2006.01)i

According to International Patent Classification (IPC) or to both national classification and IPC

### B. FIELDS SEARCHED
Minimum documentation searched (classification system followed by classification symbols)
Int.Cl. G02B7/02, F02P23/04

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | Microfilm of the specification and drawings annexed to the request of Japanese Utility Model Application No. 72648/1983 (Laid-open No. 178607/1984) (OLYMPUS OPTICAL CO., LTD.) 29 November 1984, page 11, line 8 to page 12, line 9, fig. 8-10 (Family: none) | 1–5 |
| Y | | 6 |
| Y | JP 2017-5122 A (RICOH CO., LTD.) 05 January 2017, paragraph [0037], fig. 14 (Family: none) | 6 |
| Y | JP 2007-239603 A (NISSAN MOTOR CO., LTD.) 20 September 2007, paragraph [0086], fig. 14 (Family: none) | 6 |
| A | JP 2015-169916 A (OLYMPUS CORP.) 28 September 2015, entire text, all drawings (Family: none) | 1–6 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 February 2018 (05.02.2018) | 13 February 2018 (13.02.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013096392 A